# EUROPEAN PATENT SPECIFICATION

(11) **EP 3 302 747 B1**
(45) Date of publication and mention of the grant of the patent: **20.04.2022**
(21) Application number: 16804421.2
(22) Date of filing: 02.06.2016
(51) Int. Cl.: B01D 19/00, B01D 61/00, B01D 63/00, B01D 69/00, B01D 53/22, C02F 103/06, C02F 103/36, C02F 11/12, C02F 1/44, C02F 1/72, C02F 1/66, C02F 101/10, C02F 101/16, B01D 61/24

(54) **METHOD OF REMOVING HYDROGEN SULFIDE FROM WATER**
VERFAHREN ZUR ENTFERNUNG VON SCHWEFELWASSERSTOFF AUS WASSER
PROCÉDÉ D'ÉLIMINATION DE SULFURE D'HYDROGÈNE DE L'EAU

(30) Priority: 02.06.2015 US 201562169649 P
(43) Date of publication of application: 11.04.2018
(73) Proprietor: ConocoPhillips Company, Houston, Texas 77079 (US)
(72) Inventor: JANSON, Arnold, Doha 24750 (QA); GHARFEH, Samir, Katy, Texas 77494 (US); ADHAM, Samer, Doha 24750 (QA); CHOWDHURY, Zaid, Chandler, Arizona 85225 (US); MINIER-MATAR, Joel, Doha 24750 (QA)
(74) Representative: Simpson, Paul Christopher
(86) International application number: PCT/US2016/035486
(87) International publication number: WO 2016/196773

(56) References cited:
- US-A- 4 897 091
- US-A- 4 997 569
- US-A1- 2010 122 784
- US-B1- 7 897 133
- US-B1- 9 005 333
- Dr Rakesh Govind: "NOVEL MEMBRANE TECHNOLOGY FOR DEGASSING BOILER FEED WATER", , 1 October 2005 (2005-10-01), XP055333902, Retrieved from the Internet: URL:http://www.academia.edu/13456042/NOVEL _MEMBRANE_TECHNOLOGY_FOR_DEGASSING_BOILER_ FEED_WATER [retrieved on 2018-02-05]
- XIE Z ET AL: "Ammonia removal by sweep gas membrane distillation", WATER RESEARCH, ELSEVIER, AMSTERDAM, NL, vol. 43, no. 6, 1 April 2009 (2009-04-01), pages 1693-1699, XP026026970, ISSN: 0043-1354, DOI: 10.1016/J.WATRES.2008.12.052 [retrieved on 2009-01-18]
- NORDDAHL B ET AL: "A membrane contactor for ammonia stripping, pilot scale experience and modeling", DESALINATION, ELSEVIER, AMSTERDAM, NL, vol. 199, no. 1-3, 20 November 2006 (2006-11-20), pages 172-174, XP028021008, ISSN: 0011-9164, DOI: 10.1016/J.DESAL.2006.03.037 [retrieved on 2006-11-20]
- RAKESH GOVIND: 'Novel membrane Technology for Degassing Boiler Feed Water', [Online] October 2005, XP055333902 Retrieved from the Internet: <URL:http://www.lcptech.com/images/LCPTech% 20Membrane%20degassing%20infoOct2005.pdf> [retrieved on 2016-09-27]
- MACKLIN ET AL.: 'Carbon Dioxide and Dissolved Oxygen Removal From Makeup Water by Gas Transfer Membranes', [Online] 2010, XP055333906 Retrieved from the Internet: <URL:https://www.gewater.com/kcpguest/docum ents/'Technical%20Papers_Cust/ America s/English/TP 1060EN.pdf> [retrieved on 2016-09-27]
- ARTHUR ET AL.: 'Technical Summary of Oil & Gas Produced Water Treatment Technologies', [Online] 01 March 2005, pages 1 - 53, XP055371532 Retrieved from the Internet: <URL:HTTPS://DVIKAN.NO/NTNU-STUDENTSERVER/R EPORTS/ALLCONSULTING-WATERTREATMENTOPTIONSR EPORT.PDF> [retrieved on 2016-09-27]
- XIE ET AL.: 'Ammonia removal by sweep gas membrane distillation' WATER RESEARCH vol. 43, no. 6, 2009, pages 1693 - 1699, XP026026970

## Description

### BACKGROUND OF THE INVENTION

The present invention is related to a method for removing hydrogen sulfide from a liquid stream according to the appended claims. Water that contains hydrogen sulfide is commonly referred to as sour water. Sour water can arise from a number of different industrial processes as well as occur naturally in some water sources, such as wells. Besides the smell and effect on the taste of the water, hydrogen sulfide can cause corrosion and can have a number of environmental and health effects. It would be desirable to be able to use well water in many drilling and fracturing operations in hydrocarbon formations. However, some well water contains significant amounts of hydrogen sulfide, which leads to corrosion problems and the like. The corrosiveness, malodorousness, and other deleterious properties of hydrogen sulfide make it desirable, and usually necessary, to remove this compound from streams containing it in some stage of processing. The treatment of such water is also necessary before discharging it to the environment to reduce the hydrogen sulfide content to acceptable levels.

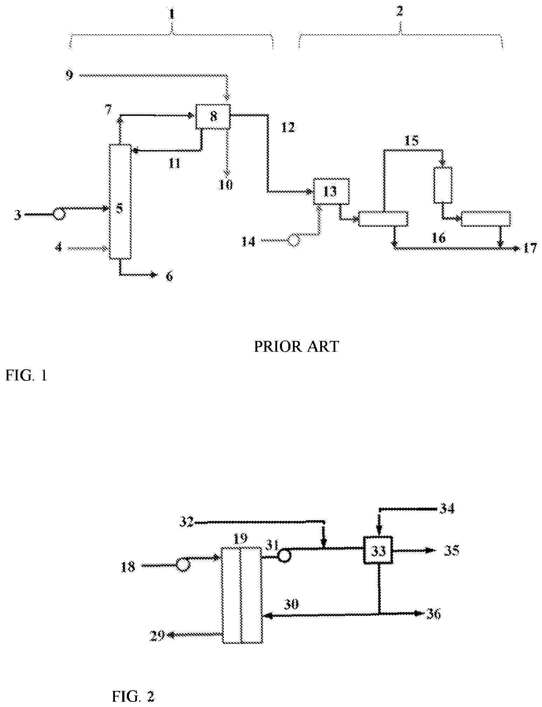

There are several recognized ways of reducing or removing hydrogen sulfide from sour water. For example, current practices generally require use of a vessel with either direct steam injection or a reboiler and a condenser, known as a sour water stripper. The sour water is supplied to the stripper, and two effluent streams are discharged: a stripped sour water stream, and sour water offgas. The sour water offgas, which contains hydrogen sulfide, is commonly sent to a reactor to convert hydrogen sulfide to non-toxic elemental sulfur (e.g., a Claus unit). A conventional sour water stripper design for hydrogen sulfide removal is depicted in FIG. 1 including a sour water stripper (1) and a Claus unit (2). A sour water stream (3) and steam (4) are injected to a stripper vessel (5). Stripped sour water (6) is removed at the bottom of the stripper vessel, and a mixture of hydrogen sulfide and steam (7) are removed from the top of the stripper vessel, and supplied to a condenser (8), cooled by a cooling water supply (9). The cooling water can be recycled by a cooling water return feature (10). Condensed water (11) can be returned to the stripper vessel. Hydrogen sulfide gas (12) exits the condenser and is transferred to a furnace (13) heated to 1000 to 1400°C. An air stream (14) is also supplied to the furnace. The hydrogen sulfide gas then enters a Claus unit comprising multiple catalytic sections (15) and separators (16) which can produce elemental sulfur (17).

The process utilizing a conventional sour water stripper has several disadvantages associated with its use, for example, significant amounts of energy are required to produce the steam necessary to strip the hydrogen sulfide. Additionally, significant amounts of cooling water are necessary to condense the steam and produce the hydrogen sulfide-containing off gas stream. In constructing the stripper and other necessary equipment, care must be taken in choosing appropriate materials because of the corrosiveness of the hydrogen sulfide, as well as the elevated temperatures required.

There remains a continuing need for an improved method to remove hydrogen sulfide from sour water that overcomes the above-described technical limitations.

US2010/122785A1 describes a method for removing hydrogen sulfide from a liquid stream using a porous separation membrane with an alkaline solution as the draw.

### SUMMARY OF THE INVENTION

A method for removing hydrogen sulfide from a liquid stream is provided as claimed in the appended claims.

The above described and other features are exemplified by the following Figures and Detailed Description.

### BRIEF DESCRIPTION OF THE DRAWINGS

FIG. 1 shows a schematic representation of a prior art design for hydrogen sulfide removal with a sour water stripper (1) and a Claus unit (2).
FIG. 2 shows a schematic representation of a system for removal of hydrogen sulfide from sour water according to the presently disclosed method using a hydrophobic membrane unit and a sweep gas receiving fluid.

### DETAILED DESCRIPTION OF THE INVENTION

The inventors hereof have discovered that porous, gas-liquid separation membranes can be of use in providing an improved method for hydrogen sulfide removal from sour produced water from an underground oil or gas producing operation. Advantageously, no external heat is required, thus providing significant advantages relating to energy requirements. The method further provides a process for converting hydrogen sulfide into a non-hazardous aqueous or solid form, with no intermediate toxic hydrogen sulfide gas produced. The process is also easily scalable since the membranes are modular. Additionally, the treated sour water can advantageously be recycled, for example in oil and gas operations. The process can also be used for well water treatment to produce drinking water.

Without being bound by theory, it is generally necessary for hydrogen sulfide to contact a water-vapor interface to be removed from a produced water stream, for example, an interface between the produced water and air, steam, methane, and the like. Thus efficiency of hydrogen sulfide removal can be influenced by the amount of interfacial area. A porous, liquid-gas membrane can provide an advantageously increased interfacial area in a relatively small volume.

In some embodiments, the liquid stream can have a pH of 2 to 9, for example 4 to 7. In some embodiments the pH of the liquid stream is 5.

The liquid stream can be an aqueous stream comprising water and a first amount of hydrogen sulfide, for example the liquid stream can be sour water. As used herein, the term "sour water" refers to water containing hydrogen sulfide in an amount (concentration) greater than 1part per million (ppm) . In some embodiments, the first amount of hydrogen sulfide can be 1 to 30,000 milligrams of hydrogen sulfide per 1 liter of the liquid stream.

The method for removing hydrogen sulfide from a liquid stream comprises contacting the liquid stream with a separation membrane having a first side and a second, opposite side, wherein the liquid stream contacts the first side of the separation membrane. The contacting can occur in any manner, for example the contacting can include conveying the liquid stream past the first side of the membrane. In some embodiments, the contacting can include circulating the liquid stream past the first side of the membrane in a batchwise or continuous manner.

The separation membrane comprises a hydrophobic polymer. For example, the polymeric membrane can comprise a fluoropolymer (e.g., polytetrafluoroethylene, polyvinylidene fluoride, polyhexafluoropropylene, polyvinyl fluoride, and the like), polyetheretherketone, polyvinyl chloride, polyolefins (e.g., polypropylene), polystyrene and polystyrene derivatives, polysulfones, polyethersulfones, and the like, and a combination comprising at least one of the foregoing. In some embodiments, copolymers of any of the above can also be used. In some embodiments, the polymeric membrane is polytetrafluoroethylene (PTFE), polyvinylidene fluoride (PVDF), polyetheretherketone (PEEK), or polypropylene (PP). In some embodiments, the membranes can comprise more than one layer, for example, the membrane can be a multilayer membrane comprising a membrane layer and a support layer. In an embodiment, the support layer can be polypropylene and the membrane layer can be polytetrafluoroethylene.

As mentioned above, the membrane is a porous membrane. Pores, i.e., continuous channels for fluid flow in communication with both first and second sides of the membrane, can be formed in a variety of ways. In some instances the pores can already be part of the materials used to form the membrane. In other instances pores can be created mechanically, electrochemically, or by using other methods generally known for creating pores.

In some embodiments, the porous membrane can have an air permeability of 5 to 100 liters per hour-centimeter² (L/h-cm²), for example 10 to 50 L/h-cm². Air permeability can be determined according to ASTM D737. In some embodiments, the porous membrane can have a liquid entry pressure of greater than or equal to 2.5 bar, for example 2.5 to 8 bar, for example 3.5 to 6 bar, as determined according to ASTM D751.

The polymeric membrane can have an average pore diameter of less than or equal to 1 micrometers, for example 0.005 to 1 micrometers, preferably 0.01 to 0.2 micrometers, preferably 0.05 to 0.2 micrometers. The polymeric membranes can have a thickness of 0.05 to 1 millimeter (mm), for example 0.1 to 0.5 mm, for example, 0.1 to 0.35 mm.

The polymeric membranes can have any suitable form that is generally known. For example, in some embodiments, the membrane can be in the form of a flat sheet membrane. In some embodiments, the membrane can be in the form of a hollow fiber membrane.

The hydrophobic polymer membranes generally permit the movement various gases through the membrane, but restrict the flow of water and water-soluble minerals due to the hydrophobic character of the membrane.

The method further comprises contacting a receiving fluid with the second, opposite side of the membrane, where the receiving fluid has a lower concentration of hydrogen sulfide than the liquid stream, thus stripping hydrogen sulfide from the liquid stream by the movement of hydrogen sulfide through the pores of the membrane from the first side to the second, opposite side of the membrane. As used herein, the term "stripping" refers to removing gaseous hydrogen sulfide from a liquid stream, for example water, oil, hydrocarbon liquids, and the like.

The receiving fluid can be conveyed past the second opposite side of the membrane in a batch-wise or continuous process. The hydrogen sulfide passes through the membrane from the liquid stream to the receiving fluid. Without being bound by theory, the hydrogen sulfide passes through the membrane as a result of the concentration gradient resulting from the high concentration of hydrogen sulfide on the first side of the membrane and the comparatively low concentration of hydrogen sulfide on the second side of the membrane. By conveying fresh receiving fluid past the second side of the membrane, the concentration gradient driving the removal of the hydrogen sulfide from the liquid stream can be maintained. Heat is not needed as a driving force in the method according to the present disclosure. Accordingly, in some embodiments, no external heat is applied to the liquid stream or membrane unit to facilitate passage of hydrogen sulfide through the membrane. In some embodiments, the liquid stream can have a temperature of 1 to 99 °C, for example 20 to 85 °C. In a preferred embodiment, the temperature of the receiving fluid is equal to the temperature of the liquid stream. In some embodiments, the temperature of the receiving fluid and the liquid stream can be increased. Without being bound by theory, it is believed that increasing the temperature can increase the driving force for the hydrogen sulfide moving through the membrane.

In some embodiments, the pressure of the receiving fluid is reduced compared to the feed. Without being bound by theory, the lower pressure in the receiving fluid can aid in the flow of hydrogen sulfide gas through the membrane. This lower pressure can include operating the receiving fluid under vacuum. In some embodiments, the receiving fluid is at a pressure of 25 to 1000 mbar, preferentially 100 to 400 mbar. These values, and all pressure values herein (except differential pressures) are absolute pressure values as opposed to gauge pressure values; for differential pressure values, this distinction is not relevant. In some embodiments, the feed pressure is elevated but only to the extent that it does not exceed the "liquid entry pressure" specified by the membrane manufacturer. The elevation in feed pressure is preferentially less than 1 bar (meaning that the absolute pressure is preferably less than 2 bar, i.e. less than 1 bar above atmospheric pressure)

In absolute terms, it is the pressure difference across the membrane which is believed to be significant. A pressure difference of at least 200 mbar may increase the rate of flow of hydrogen sulfide gas through the membrane. A pressure difference range of 200 to 4,000 mbar may be effective, such as between 300 and 2,000 mbar, for example between 400 and 1,400 mbar.

In general, the rate of permeability of the hydrogen sulfide, i.e., flux through the membrane, is influenced by variables such as the membrane thickness, the permeability constant of the membrane, density, free volume, the physical nature of the membrane, operating pH, the partial pressure differential of the gas across membrane, the operating temperature, the operating pressure and the like. By the removal of hydrogen sulfide from the liquid stream by the passing of hydrogen sulfide through the pores of the membrane, the liquid stream is converted to a reduced-sulfide liquid stream having a second amount of hydrogen sulfide that is less than the first amount of hydrogen sulfide. For example, the second amount of hydrogen sulfide is less than or equal to 5% of the first amount of hydrogen sulfide and, preferably, less than or equal to 1% of the first amount of hydrogen sulfide. In some embodiments, the reduced-sulfide liquid stream has a non-detectable level of hydrogen sulfide.

In some embodiments, the method for removing hydrogen sulfide can be repeated such that the liquid stream is contacted with more than one polymeric membrane to further reduce the hydrogen sulfide content. For example, in some embodiments, the method can optionally include repeating the contacting of the liquid stream with a first side of a porous, gas-liquid separation membrane to provide a reduced-sulfide liquid stream comprising hydrogen sulfide in an amount less than or equal to 10% of the first amount of hydrogen sulfide, preferably less than or equal to 5% of the first amount of hydrogen sulfide, more preferably less than or equal to 1% of the first amount of hydrogen sulfide. Thus, in some embodiments, the method disclosed herein can be a multistage process comprising contacting the liquid stream with two or more membranes. In some embodiments, the membranes are configured in stages with a first stage removing the majority of the hydrogen sulfide (e.g., greater than 50%) and a second stage serving as a "polishing" stage to remove the residual amounts of hydrogen sulfide left in sour water discharged from the first.

In some embodiments, additional gases present in the liquid stream can be removed by the method disclosed herein. For example, ammonia can be removed from the liquid stream.

In some embodiments, ammonia can be removed from the liquid stream simultaneously with hydrogen sulfide. When the hydrogen sulfide and the ammonia are removed simultaneously, it is generally preferred that the solution pH is 6 to 8. In some embodiments, the pH of the liquid stream can be adjusted such that ammonia and hydrogen sulfide can be removed in a step-wise process. For example, hydrogen sulfide can be removed preferentially when the pH of the liquid stream is less than 7. For example, ammonia can be removed preferentially when the pH of the liquid stream is greater than 9.

The method can optionally comprise pretreating the stream prior to contacting the separation membrane. Pretreating the liquid stream can comprise, for example, pressurizing the liquid stream, softening, heating, adjusting the pH, a chemical treatment, filtering, or a combination comprising at least one of the foregoing. Pretreating the liquid stream comprising the hydrogen sulfide can advantageously improve the flux of hydrogen sulfide across the membrane, and reduce membrane-related problems. For example, pressurizing the liquid stream, followed by addition of air, nitrogen, or another gas to the stream while under pressure can increase the rate at which hydrogen sulfide passes through the membrane if the pressure is released at the inlet to the membrane unit. In another embodiment, by pretreating to remove particulate contaminants (e.g., by filtering, centrifuging, and the like), the lifetime of the membrane can be extended, and the overall system performance can be improved.

In an embodiment, the method for removal of hydrogen sulfide from a liquid stream can be carried out according to the process depicted in FIG. 2. A liquid stream comprising sour water (18) is contacted with a hydrophobic membrane unit (19). Hydrogen sulfide can pass through the membrane into a receiving fluid comprising sweet gas (30). "Sweet gas" refers to a fuel gas that is low in hydrogen sulfide, for example has a concentration of hydrogen sulfide that is lower than the concentration of hydrogen sulfide in the liquid stream. Upon contacting the hydrogen sulfide that has passed through the membrane, the sweet gas is converted to a sour gas feed (31) comprising the hydrogen sulfide, which exits the membrane unit. This sour gas feed (31) can optionally be combined with a sour gas feed (32) which is recovered directly from a sour gas well. The sour gas feed enters an amine treating unit (33), where a lean amine solution (34) is added to provide a rich amine stream (35). The rich amine stream (35) is high in hydrogen sulfide content, and is transferred to an amine regeneration system to recover the lean amine stream that is recycled to the amine treating unit. Also recovered from amine treating unit (33) is a sweet gas stream which is at least in part, recycled to the membrane unit and can be removed for further processing as sweet gas stream (36).

The inventors hereof have thus provided an improved method for removing hydrogen sulfide from sour water. The method disclosed herein has applications through the oil and gas industry worldwide. The disclosed method can advantageously convert hydrogen sulfide into a non-hazardous aqueous or solid form in a single step. No heating or cooling is required, allowing for minimal external energy to be expended. Furthermore, ambient temperature operation permits the use of plastic materials in the construction of a system for carrying out the method. Additionally, the disclosed method can remove other gases (e.g., ammonia) and/or volatile hydrocarbons from a liquid feed. Advantageously, the present disclosure provides a method wherein the reduced-sulfide liquid stream can optionally be directly disposed of by discharging to the environment.

In general, the invention may alternately comprise, consist of, or consist essentially of, any appropriate components herein disclosed. The invention may additionally, or alternatively, be formulated so as to be devoid, or substantially free, of any components, materials, ingredients, adjuvants or species used in the prior art compositions or that are otherwise not necessary to the achievement of the function and/or objectives of the present invention.

All ranges disclosed herein are inclusive of the endpoints, and the endpoints are independently combinable with each other. "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. "Or" means "and/or."

## Claims

1. A method for removing hydrogen sulfide from a liquid stream (18), the method comprising:
contacting a first side of a porous, hydrophobic, gas-liquid separation membrane (19) with a liquid stream (18) comprising a first amount of hydrogen sulfide; and
contacting a second, opposite side of the separation membrane (19) with a receiving fluid (30)
having a lower concentration of hydrogen sulfide than the liquid stream (18), wherein the hydrogen sulfide moves through the pores of the membrane (19) from the first side to the second side, to provide a reduced-sulfide liquid stream (29) having a second amount of hydrogen sulfide that is less than the first amount of hydrogen sulfide in the liquid stream (18);
**characterised in that** the receiving fluid (30) comprises a sweet gas being a fuel gas that has a concentration of hydrogen sulfide that is lower than the concentration of hydrogen sulfide in the liquid stream (18);
further **characterized in that** the receiving fluid is converted to a sour gas feed (31) which exits the membrane unit (19) and is fed to an amine treating unit (33),
where a lean amine solution (34) is added to provide a rich amine stream (35) which is high in hydrogen sulfide content, and the rich amine stream (35) is transferred to an amine regeneration system to recover (i) the lean amine stream that is recycled to the amine treating unit and (ii) the sweet gas stream (30) that is at least in part recycled to the membrane unit (19).

2. The method of claim 1, wherein the second amount of hydrogen sulfide is less than or equal to 10% (e.g. 0.01% to 10%) of the first amount of hydrogen sulfide, preferably less than or equal to 5% (e.g.0.01% to 5%) of the first amount of hydrogen sulfide, more preferably less than or equal to 1% (e.g. 0.01% to 1%) of the first amount of hydrogen sulfide.

3. The method of claims 1 or 2, wherein the first amount of hydrogen sulfide is 1 to 30,000 milligrams of hydrogen sulfide per 1 liter of the liquid stream (18).

4. The method of any of claims 1 to 3, where the liquid stream (18) has a pH of 2 to 9, preferably 4 to 7.

5. The method of any of claims 1 to 4, wherein the membrane (19) is a hydrophobic polymeric membrane comprising polytetrafluoroethylene, polyvinylidene fluoride, polypropylene, polyetheretherketone, or a combination comprising at least one of the foregoing.

6. The method of any of claims 1 to 5, wherein the pores of the membrane (19) are 0.005 to 1 micrometers, preferably 0.01 to 0.2 micrometers.

## Patentansprüche

1. Verfahren zur Entfernung von Schwefelwasserstoff aus einem Flüssigkeitsstrom (18), wobei das Verfahren Folgendes umfasst:
Inkontaktbringen einer ersten Seite einer porösen, hydrophoben Gas-Flüssigkeits-Trennmembran (19) mit einem Flüssigkeitsstrom (18), der eine erste Menge an Schwefelwasserstoff umfasst; und
Inkontaktbringen einer zweiten, gegenüberliegenden Seite der Trennmembran (19) mit einem aufnehmenden Fluid (30), das eine niedrigere Konzentration an Schwefelwasserstoff als der Flüssigkeitsstrom (18) aufweist, wobei sich der Schwefelwasserstoff durch die Poren der Membran (19) von der ersten Seite zu der zweiten Seite bewegt, um einen Flüssigkeitsstrom (29) mit reduziertem Schwefelwasserstoff bereitzustellen, der eine zweite Menge an Schwefelwasserstoff aufweist, die geringer ist als die erste Menge an Schwefelwasserstoff in dem Flüssigkeitsstrom (18);
**dadurch gekennzeichnet, dass** das aufnehmende Fluid (30) ein Süßgas umfasst, das ein Brenngas ist, das eine Schwefelwasserstoffkonzentration aufweist, die niedriger ist als die Schwefelwasserstoffkonzentration in dem Flüssigkeitsstrom (18);
weiter **dadurch gekennzeichnet, dass** das aufnehmende Fluid in eine Sauergaszufuhr (31) umgewandelt wird, welche die Membraneinheit (19) verlässt und einer Aminbehandlungseinheit (33) zugeführt wird,
wobei eine magere Aminlösung (34) zugegeben wird, um einen reichen Aminstrom (35) bereitzustellen, der einen hohen Schwefelwasserstoffgehalt aufweist, und der reiche Aminstrom (35) in ein Aminregenerationssystem überführt wird, um (i) den mageren Aminstrom, der in die Aminbehandlungseinheit zurückgeführt wird, und (ii) den Süßgasstrom (30), der zumindest teilweise in die Membraneinheit (19) zurückgeführt wird, zurückzugewinnen.

2. Verfahren nach Anspruch 1, wobei die zweite Menge an Schwefelwasserstoff weniger als oder gleich 10% (z.B. 0,01% bis 10%) der ersten Menge an Schwefelwasserstoff, bevorzugt weniger als oder gleich 5 % (z.B. 0,01% bis 5%) der ersten Menge an Schwefelwasserstoff, bevorzugter weniger als oder gleich 1% (z. B. 0,01% bis 1%) der ersten Menge an Schwefelwasserstoff beträgt.

3. Verfahren nach Anspruch 1 oder 2, wobei die erste Menge an Schwefelwasserstoff 1 bis 30.000 Milligramm Schwefelwasserstoff pro 1 Liter des Flüssigkeitsstroms (18) beträgt.

4. Verfahren nach einem der Ansprüche 1 bis 3, wobei der Flüssigkeitsstrom (18) einen pH-Wert von 2 bis 9, bevorzugt 4 bis 7, aufweist.

5. Verfahren nach einem der Ansprüche 1 bis 4, wobei die Membran (19) eine hydrophobe Polymermembran ist, die Polytetrafluorethylen, Polyvinylidenfluorid, Polypropylen, Polyetheretherketon oder eine Kombination umfasst, die mindestens eine der vorgenannten Substanzen umfasst.

6. Verfahren nach einem der Ansprüche 1 bis 5, wobei die Poren der Membran (19) 0,005 bis 1 Mikrometer, bevorzugt 0,01 bis 0,2 Mikrometer betragen.

## Revendications

1. Procédé d'élimination de sulfure d'hydrogène d'un flux de liquide (18), le procédé comprenant :
la mise en contact d'un premier côté d'une membrane de séparation de gaz-liquide, hydrophobe, poreuse (19) avec un flux de liquide (18) comprenant une première quantité de sulfure d'hydrogène ; et
la mise en contact d'un second côté opposé de la membrane de séparation (19) avec un fluide de réception (30) présentant une concentration inférieure en sulfure d'hydrogène à celle du flux de liquide (18), dans lequel le sulfure d'hydrogène se déplace à travers les pores de la membrane (19) du premier côté au second côté, pour fournir un flux de liquide de sulfure réduit (29) présentant une seconde quantité de sulfure d'hydrogène qui est inférieure à la première quantité de sulfure d'hydrogène dans le flux de liquide (18) ;
**caractérisé en ce que** le fluide de réception (30) comprend un gaz non corrosif qui est un gaz de combustible qui présente une concentration de sulfure d'hydrogène qui est inférieure à la concentration de sulfure d'hydrogène dans le flux de liquide (18) ;
caractérisé en outre que le fluide de réception est converti en alimentation en gaz corrosif (31) qui sort de l'unité de membrane (19) et est fournie à une unité de traitement d'amine (33),
où une solution d'amine pauvre (34) est ajoutée pour fournir un courant d'amine riche (35) qui est élevé en teneur de sulfure d'hydrogène, et le courant d'amine riche (35) est transféré à un système de régénération d'amine pour récupérer (i) le courant d'amine pauvre qui est recyclé à l'unité de traitement d'amine et (ii) le courant de gaz non corrosif (30) qui est au moins en partie recyclé à l'unité de membrane (19).

2. Procédé selon la revendication 1, dans lequel la seconde quantité de sulfure d'hydrogène est inférieure à ou égale à 10% (par exemple 0,01% à 10%) de la première quantité de sulfure d'hydrogène, de préférence inférieure à ou égale à 5% (par exemple 0,01% à 5%) de la première quantité de sulfure d'hydrogène, plus préférentiellement inférieure à ou égale à 1% (par exemple 0,01% à 1 %) de la première quantité de sulfure d'hydrogène.

3. Procédé selon la revendication 1 ou 2, dans lequel la première quantité de sulfure d'hydrogène va de 1 à 30 000 milligrammes de sulfure d'hydrogène par 1 litre du flux de liquide (18).

4. Procédé selon l'une quelconque des revendications 1 à 3, où le flux de liquide (18) présente un pH de 2 à 9, de préférence de 4 à 7.

5. Procédé selon l'une quelconque des revendications 1 à 4, dans lequel la membrane (19) est une membrane polymère hydrophobe comprenant du polytétrafluoroéthylène, du fluorure de polyvinylidène, du polypropylène, du polyétheréthercétone, ou une combinaison comprenant au moins un de ce qui précède.

6. Procédé selon l'une quelconque des revendications 1 à 5, dans lequel les pores de la membrane (19) sont compris entre 0,005 et 1 micromètre, de préférence entre et 0,2 micromètre.
